# EUROPEAN PATENT SPECIFICATION

(11) **EP 1 216 534 B1**
(45) Date of publication and mention of the grant of the patent: **12.11.2008**
(21) Application number: 00963358.7
(22) Date of filing: 11.09.2000
(51) Int. Cl.: G07C 1/20, G06K 9/00

(54) **MOBILE FINGERPRINT SCANNER AND DOCKING STATION**
MOBILER FINGERABDRUCKABTASTER UND KOPPLUNGSVORRICHTUNG
CAPTEUR MOBILE D'EMPREINTES DIGITALES ET POSTE D'ACCUEIL ASSOCIE

(30) Priority: 10.09.1999 US 153182 P
(43) Date of publication of application: 26.06.2002
(73) Proprietor: ULTRA-SCAN CORPORATION, Amherst, NY 14226 (US)
(72) Inventor: SCHNEIDER, John, K., Snyder, NY 14226 (US); GOJEVIC, Stephen, M., Tonawanda, NY 14207 (US); TURNER, Horatio, W., IV, King George, VA 27485 (US)
(74) Representative: Moir, Michael Christopher
(86) International application number: PCT/US2000/024879
(87) International publication number: WO 2001/019016

(56) References cited:
- US-A- 5 456 256
- US-A- 5 467 403
- US-A- 5 790 668
- US-A- 5 878 211

## Description

### Background of the Invention

Inkless fingerprint scanners, also known as live scan fingerprint readers or biometric devices, have been widely used for many years. These systems obtain an image of the fingerprint without the use of inks. Once an image is acquired, it is then processed and an identification or verification of the individual's identity is made.

Many different techniques have been used to obtain an image of the finger including optical scanners, thermal scanners, capacitive scanners, E-field sensors, ultrasonic scanners, and many more. Each uses a different modality or technique to image the same physical characteristic; the ridge structure of the finger.

In use of such scanners in law enforcement and other applications it would be highly desirable to provide a mobile or portable scanner which can be hand carried easily for convenient use at various physical locations. It would also be highly desirable to provide the capability of interfacing with such a scanner at one or more physical locations for such operations as downloading fingerprint images and other information stored in the scanner, scanner battery charging and scanner diagnosis.

In the maintenance of security for offices, factories and similar sites, it is customary for one or more security officers to make periodic visits to a series of locations spaced around the site, or to visit a series of separate sites at different locations, to check that all is well. This sequence of visits (known as a "round") can be monitored by requiring the security officer to enter a portable recorder into a control station at each location. Thus GB 2260438 A (Foley) discloses a security system which includes a recorder with a timer carried by a security guard, at least one control station on a security round for receiving the recorder and recording a unique code and time-of-day in the recorder, and a download control station that downloads the recorded codes and times-of-day from the recorder at the end of the route.

The present invention in its preferred embodiment seeks to provide an improved method and system for security maintenance, in which it is ensured that the security officer visits each control station in person. It also can be used for example to monitor the rounds of security persons who inspect and service ATM machines.

### Summary of the Invention

In one aspect the invention provides a fingerprint identification and security method comprising the steps of:
a) carrying, on a security person, a portable fingerprint scanner which includes a time-of-day clock and a port for data communication to and from the scanner;
b) inserting, by the security person, the scanner into a plurality of docking stations (located at respective locations in a round of locations where inspections are to be performed, each of the docking stations being in the form of a receptacle for receiving the scanner, each docking station having a microprocessor and a unique code identification, there being bidirectional data communication between the docking station and the scanner received therein for allowing the security person to insert the scanner into each docking station and a record to be made at each docking station of the time-of-day, the docking station's unique identification and a fingerprint image of the security person taken at the docking station location; and,
c) downloading to a computer or other monitoring means the record of fingerprint images and times of day correlated with the docking station identification codes.

In another aspect the invention provides a fingerprint identification and security system comprising:
a) a portable fingerprint scanner which can be carried by a security person and which includes a time-of-day clock and a port for data communication to and from the scanner;
b) a plurality of docking stations located at locations where inspections are to be performed, each of the docking stations being in the form of a receptacle for receiving the scanner, each docking station having a microprocessor and a unique code identification, there being bidirectional data communication between the docking station and the scanner received therein for allowing the security person to insert the scanner into each docking station and a record to be made at each docking station of the time-of-day, the docking station's unique identification and a fingerprint image of the security person taken at the docking station location; and,
c) a computer or other monitoring means configured to have downloaded thereto the record of fingerprint images and times of day correlated with the docking station identification codes.

The record may be made in the scanner and the downloading step(c) may be performed by inserting, by the security person at the end of the round, the scanner into a supervisory docking station operatively associated with the computer or other monitoring means, the supervisory docking station being in the form of a receptacle for receiving insertion of the scanner and for downloading from the scanner the finger-print images and times-of-day correlated with the docking station identification codes. The computer and docking station may be operatively connected so that diagnostic routines are provided by the computer for operation on the scanner while in the docking station. The scanner may be automatically disabled and an identification provided in response to a problem detected by a said diagnostic routine.

Preferably, the scanner is battery-operated and the docking station is provided with a voltage source for recharging the scanner battery when in the docking station.

Preferably, the scanner is an ultrasonic fingerprint scanner. Preferably, the scanner has barcode scanning capability.

The foregoing and additional advantages and characterizing features of the present invention will become clearly apparent upon a reading of the ensuing detailed description together with the included drawings.

The following detailed description of the invention, when read in conjunction with the accompanying drawings, is in such full, clear, concise and exact terms as to enable any person skilled in the art to which it pertains, or with which it is most likely connected, to make and use the invention.

### Brief Description of the Drawings

Fig. 1 is a diagrammatic view of a mobile finger-print scanner and docking station usable in the present invention;
Fig. 2 is a schematic diagram further illustrating a mobile fingerprint scanner and docking station usable in the present invention; and,
Fig. 3 is a schematic diagram illustrating application of a mobile fingerprint scanner and docking station in a security system according to the present invention.

### Detailed Description of the Preferred Embodiments

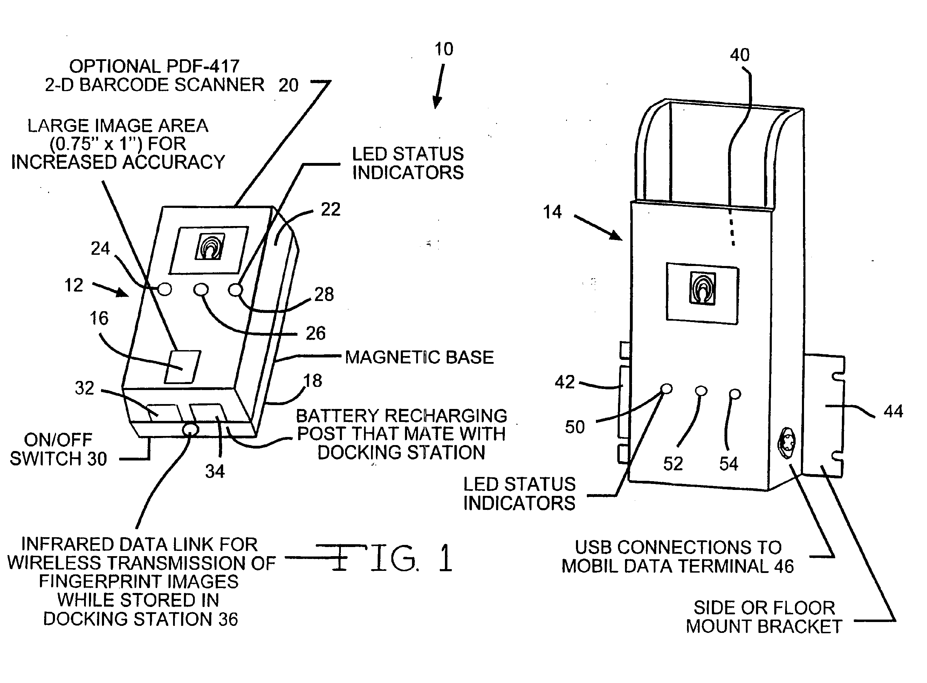

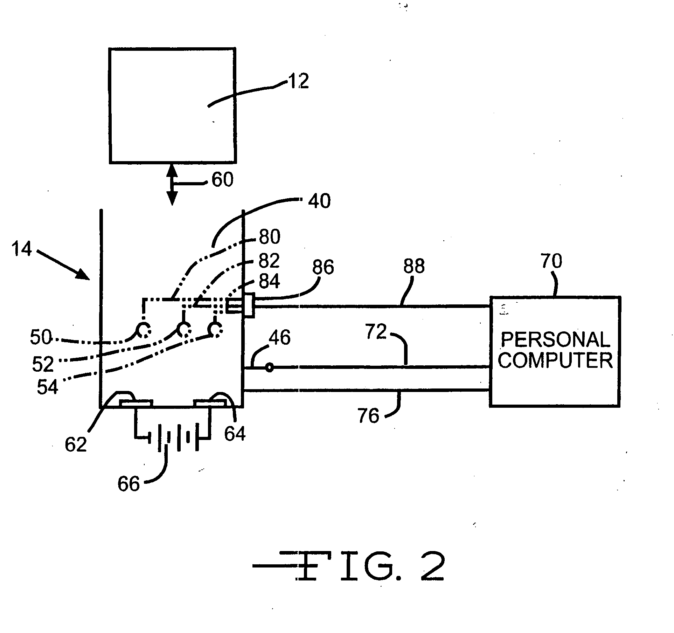

Referring first to Figs. 1 and 2 there is shown and described a system 10 including a mobile or portable fingerprint scanner 12 and a docking station 14 adapted to operatively receive the scanner. The scanner 12 can be hand carried to various locations for obtaining fingerprint images and other information such as images from bar code scanning. The scanner 12 is battery operated and has the capability of storing a number of such images. The scanner 12 can be of various types including, but not limited to, ultrasonic, optical, capacitance, E-field and thermal/infrared. By way of example, the mobile scanner 12 can be an ultrasonic scanner of the type shown in United States Patent No. 5,647,364 issued July 15, 1997, the disclosure of which is hereby incorporated by reference. Referring to Fig. 10 of that patent, memory 252 would have the capability of storing several fingerprint images and bar codes which will be described. In addition, the scanner of that patent would be adapted for battery operation. In a typical law enforcement situation, the scanner is carried by the law enforcement officer, such as in a pouch on his belt, to wherever the subject(s) to be fingerprinted is located. The officer can set the scanner on a suitable supporting surface, such as the hood of an automobile, and then use the scanner to take as many fingerprint images as needed. The subject's finger is placed on the image area 16 and the fingerprint is scanned to develop an image thereof as explained in the above-referenced Patent No. 5,647,364. The images are stored in the scanner 12 for later retrieval. A magnetic base 18 on the scanner facilitates temporary securement of the scanner on the vehicle body during use. The scanner 12 can be provided with bar code scanning capability via a bar code scanner 20 on the end of housing 22 so that when the officer takes a fingerprint image of a subject he also can scan the bar code information on the subject's vehicle registration and/or vehicle operator's license. LED indicators 24, 26 and 28 are provided to signal various scanner conditions as will be described. An on-off switch 30 controls supply of power to the scanner and hence its operation. Scanner 12 is provided with battery recharging posts 32, 34 on one end of housing 22 which mate with contacts at docking station 14 for recharging the scanner battery in a manner which will be described. Scanner 12 also is provided with an infrared data link 36 for wireless transmission of fingerprint images while stored in docking station 14 as will be described.

The docking station 14 is in the form of a receptacle into which the scanner is inserted after obtaining one or more images. As shown in Fig. 1, the docking station is generally hollow rectangular in shape, open at one end, and having an interior region 40 shaped and sized to receive the scanner in a snug but removable manner. While the scanner is operatively received in the docking station 14, the image(s) stored in the scanner are downloaded via a connection to a personal computer or the like, the scanner battery is recharged and the docking station performs various diagnostic operations on the scanner before it is withdrawn from the docking station for further use. In a typical law enforcement situation, the docking station 14 is located within the law enforcement vehicle, being mounted to the floor or inside wall of the vehicle, such as by the brackets 42, 44 or the like and the scanner 12 can be used by law enforcement personnel at locations remote from the vehicle as previously described. When the law enforcement officer returns to the vehicle, he inserts the scanner 12 in the docking station 14. The scanner 12 is retained within the docking station by a magnetic latch or other suitable means (not shown). The docking station 14 is connected to a source of 12 volts d.c. in the vehicle, such as to the vehicle battery by appropriate connection or through the cigarette lighter receptacle. The docking station 14 also is connected to the personal computer commonly provided in law enforcement vehicles, via the USB connection 46 indicated in Fig. 1. Docking station 14 also is provided with LED status indicators 50, 52 and 54. While the scanner 12 is in the docking station 14, the images stored therein are downloaded to the onboard PC for processing. The scanner battery is recharged while in the docking station 14. The two battery charging posts 32, 34 shown in Fig. 1 on one end of the scanner 12 mate with corresponding contacts in the docking station 14 to connect the 12V vehicle supply to the scanner battery. Also, each time the scanner 12 is stored in the docking station 14, a diagnostic routine is run on the scanner. If a problem is detected, the next time the scanner 12 is removed from the docking station 14 the scanner automatically is disabled and the appropriate LED status indicator is operated.

Table 1 sets forth additional features of scanner 12 and docking station 14, and Table 2 sets forth various advantages of the same.

**Table 1**

| Scanner | |
|---|---|
| • | Image Size - 0.75"w x 1.0"l |
| • | Stores up to 8 complete fingerprint images |
| • | LED Indicators: |
| | Green - scanner ready to acquire image Amber - flashes the number of fingerprint images stored internally Red - low battery indicator |
| • | Resolution - 500 dpi, 256 levels of grey |
| • | Infrared wireless communication link downloads images to docking station |
| • | Standard 9 volt rechargeable battery provides several hours of operation |
| • | Size: 5.75"1 x 3.25"w x 2.0"h |
| • | Weight 2.1 lbs |

| Docking Station | |
|---|---|
| • | 12 volt DC operation |
| • | Interfaces to Mobile Data Terminal via USB port |
| • | LED indicators |
| | Green - power on Amber - transferring data to MDT Red - scanner batter recharging |
| • | Built-in 9 volt battery charger |
| • | Floor or side wall mount options |
| • | Complete Software device drivers provided as a DLL for Win 95/98 and NT |
| • | Size: 9"l x 3.8" w x 2.6"d |
| • | Weight 1.7 lbs |

| General | |
|---|---|
| • | UL 1950, CSA No. 950-22.2, and FCC approvals |
| • | Reliability - vibration tested to 9.5Gs, 20-2000Hz, random sinusoidal |
| • | Operating Temperature - 140°F (max) |
| • | Storage Temperature - 158°F (max) |

**Table 2**

| | |
|---|---|
| • | Proprietary ultrasonic technology unaffected by most contamination found on fingers or platen |
| • | Stores up to 8 individual fingerprints for transferring to Mobile Data Terminal |
| • | Operation unaffected by ambient light or glare |
| • | Self-test scanner diagnostics automatically activated upon removal from the docking station |
| • | Images automatically deleted upon successful transfer to docking station |
| • | Magnetic base easily attached to vehicle |
| • | Durable scratch resistant platen |
| • | Rugged construction designed to withstand the harshest of environments |
| • | Stores in pouch for easy mounting on the law enforcement officer's belt |
| • | Securely locks into docking station |
| • | Vehicle docking station installs easily using floor or side mount bracket |

The foregoing is illustrated further in Fig. 2. The bidirectional arrow 40 represents the path along which scanner 12 is inserted into and withdrawn from interior region 40 of docking station 14. Contacts 62 and 64 within scanner 14 are connected to a battery 66 or other appropriate voltage source for recharging the battery within scanner 12 when scanner contacts 32, 34 mate with docking station contacts 62 and 64. A personal computer 70, i.e., the onboard PC previously mentioned, is connected via cable 72 to the USB connection 46 on docking station 14 for downloading the fingerprint images stored in scanner 12 for processing by computer 70. Another connection via cable 76 between computer 70 and station 14 is shown in Fig. 2 for the purpose of performing the diagnostic routines on scanner 12 as previously described. The LED indicators 50, 52 and 54 are connected by lines 80, 82 and 84 respectively to an appropriate routing/processing circuit 86 which, in turn, is connected by cable 88 to computer 70 for control of the indicators. Obviously, the three cables 72, 76 and 88 shown in Fig. 2 can be combined into a single cable connection between PC 70 and station 14.

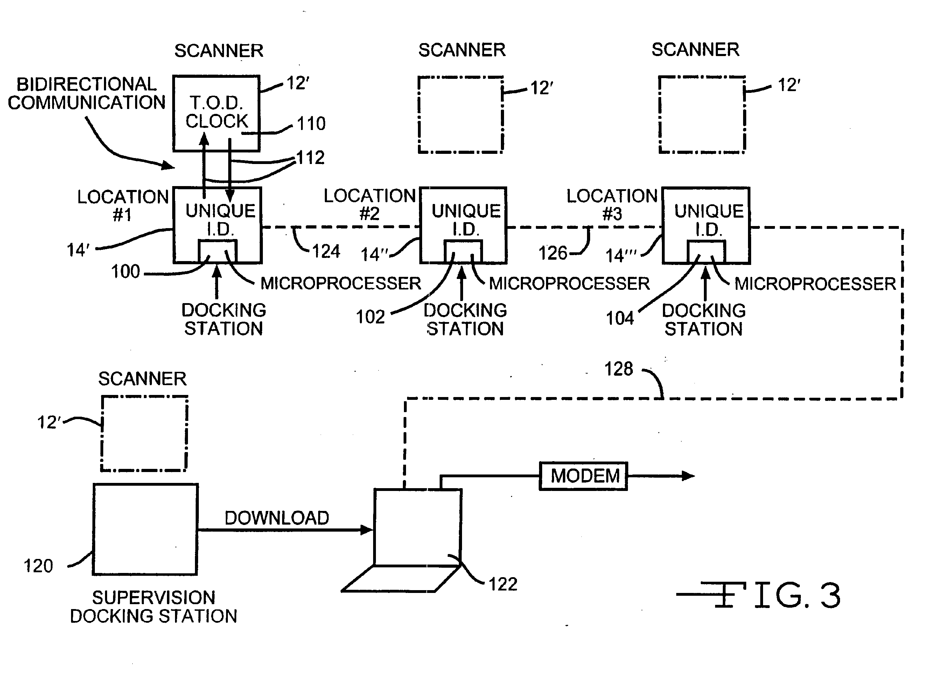

Fig. 3 illustrates application of the mobile or portable fingerprint scanner and docking station of the present invention in a security system. In a typical security situation, a single scanner 12' is carried by the security officer and a docking station is located at each checkpoint or location where the officer is to perform an inspection.

In Fig. 3 the three locations identified #1, #2 and #3 represent checkpoints or location where the security guard is scheduled to inspect or contact during his inspection round. While three locations are shown in Fig. 3 by way of illustration, there can be any number of such locations. A docking station of the type shown in Fig. 1 is located at each location #1, #2 and #3 in Fig. 3. They are designated 14', 14" and 14" in Fig. 3. However, each docking station is a stand alone unit, not connected to a PC ,and has its own power supply. A microprocessor is provided in each docking station and each station has its own unique identification number or code. The microprocessors are designated 100, 102 and 104 in Fig. 3. Each scanner is provided with a time of day clock, for example clock 110 in scanner 12', and bi-directional communication represented by arrows 112 in Fig. 3 is provided between each scanner and the docking station when the scanner is placed in the station.

When the security officer makes his round, when he reaches each of the locations #1, #2 and #3 shown in Fig. 3, he operates the scanner carried with him to scan his fingerprint then inserts the scanner into the docking station at that location. The bi-directional communication between scanner and docking station provides a record of the time of day, the unique i.d. of the docking station and the fingerprint image of the security officer. This record can be stored in either or both of the scanner and docking station. Then, when the security officer completes the round, he inserts his scanner into the supervision base or docking station 120 which downloads the fingerprint images along with the times of day correlated with the docking station identification numbers to the PC 122 for further processing such as sending to a central monitoring station. As a result, control is provided on the security officer himself by way of the fingerprint imaging and his round by way of the times of day recorded against the docking station identifications. If desired, the docking stations can be connected together for direct transmission to the PC or other monitor as indicated by the broken lines 124, 126 and 128 in Fig. 3.

The principles of the arrangement of Fig. 3 can be applied to other situations, for example in monitoring the rounds of persons who inspect and service ATM machines. In all of the situations, the entire monitoring task can be accomplished using a single scanner in combination with a number of docking stations. Since the docking stations are relatively less expensive to manufacture this can result in economic advantages. In the application illustrated in Figs. 1 and 2, an entire fleet of law enforcement vehicles can be equipped with docking stations at relatively low cost and the fingerprint scanners can be acquired according to operational plans and budget.

It is therefore apparent that the present invention accomplishes its intended objectives. While embodiments of the present invention have been described in detail, that has been done for the purpose of illustration, not limitation.

## Claims

1. A fingerprint identification and security method comprising the steps of:
a) carrying, on a security person, a portable fingerprint scanner (12) which includes a time-of-day clock and a port for data communication to and from the scanner;
b) inserting, by the security person, the scanner into a plurality of docking stations (14', 14", 14''') located at respective locations in a round of locations where inspections are to be performed, each of the docking stations being in the form of a receptacle for receiving the scanner, each docking station having a microprocessor and a unique code identification, there being bidirectional data communication between the docking station and the scanner received therein for allowing the security person to insert the scanner into each docking station and a record to be made at each docking station of the time-of-day, the docking station's unique identification and a fingerprint image of the security person taken at the docking station location; and,
c) downloading to a computer or other monitoring means (122) the record of fingerprint images and times of day correlated with the docking station identification codes.

2. A method according to claim 1, wherein the record is made in the scanner and the downloading step (c) is performed by inserting, by the security person at the end of the round, the scanner into a supervisory docking station (120) operatively associated with the monitoring means, the supervisory docking station being in the form of a receptacle for receiving insertion of the scanner and for downloading from the scanner the finger-print images and times-of-day correlated with the docking station identification codes.

3. A fingerprint identification and security system comprising:
a) a portable fingerprint scanner (12) which can be carried by a security person and which includes a time-of-day clock and a port for data communication to and from the scanner;
b) a plurality of docking stations (14', 14", 14''') located at locations where inspections are to be performed, each of the docking stations being in the form of a receptacle for receiving the scanner (12), each docking station having a microprocessor and a unique code identification, there being bidirectional data communication between the docking station and the scanner received therein for allowing the security person to insert the scanner into each docking station and a record to be made at each docking station of the time-of-day, the docking station's unique identification and a fingerprint image of the security person taken at the docking station location; and,
c) a computer or other monitoring means (122) configured to have downloaded thereto the record of fingerprint images and times of day correlated with the docking station identification codes.

4. A system according to claim 3, wherein the record is made in the scanner, the system further including a supervisory docking station (120) in the form of a receptacle for, at the end of a round of inspection at said locations, receiving insertion of the scanner (12) and for downloading from the scanner the fingerprint images and times-of-day correlated with the docking station identification codes for onward downloading to the computer (122).

5. A system according to claim 4, wherein diagnostic routines are provided by the computer (122) for operation on the scanner (12) while in the supervisory docking station (120).

6. A system according to any of claims 3, 4 or 5, wherein the scanner (12) is battery-operated and wherein the supervisory docking station (120) is provided with a voltage source for recharging the scanner battery when in the docking station.

7. A system according to any of claims 3 to 6, wherein the scanner (12) is an ultrasonic fingerprint scanner.

8. A system according to any of claims 3 to 7, wherein the scanner (12) has barcode scanning capability.

## Patentansprüche

1. Fingerabdruckidentifizierungs- und -sicherheitsverfahren, das die folgenden Schritte umfasst:
a) Mitführen eines tragbaren Fingerabdruck-Scanners (12), der eine Tageszeit-Uhr und einen Anschluss für die Datenkommunikation zu und von dem Scanner enthält, durch eine Sicherheitsperson;
b) Einsetzen des Scanners durch die Sicherheitsperson in mehrere Andockstationen (14', 14", 14"'), die sich an jeweiligen Orten einer Runde befinden, an denen Kontrollen vorgenommen werden sollen, wobei jede der Andockstationen die Form eines Aufnahmebehälters für die Aufnahme des Scanners hat, wobei jede Andockstation einen Mikroprozessor und eine eindeutige Code-Kennung besitzt, wobei zwischen der Andockstation und dem darin aufgenommenen Scanner eine bidirektionale Datenkommunikation erfolgt, um der Sicherheitsperson zu ermöglichen, den Scanner in die Andockstation einzusetzen und an jeder Andockstation eine vorzunehmende Aufzeichnung der Tageszeit, der eindeutigen Kennung der Andockstation und eines am Ort der Andockstation genommenen Fingerabdruckbildes der Sicherheitsperson auszuführen, und
c) Herunterladen der Aufzeichnung der Fingerabdruckbilder und der Tageszeiten, die mit den Kennungscodes der Andockstation korreliert sind, in einen Computer oder andere Überwachungsmittel (122).

2. Verfahren nach Anspruch 1, wobei die Aufzeichnung im Scanner erfolgt und der Herunterladeschritt (c) durch Einsetzen des Scanners in eine den Überwachungsmitteln funktional zugeordnete Überwachungsandockstation (120) durch die Sicherheitsperson ausgeführt wird, wobei die Überwachungsandockstation die Form eines Aufnahmebehälters zum aufnehmenden Einsetzen des Scanners und zum Herunterladen der mit den Andockstation-Kennungscodes korrelierten Fingerabdruckbilder und Tageszeiten von dem Scanner hat.

3. Fingerabdruckidentifizierungs- und -sicherheitssystem, das umfasst:
a) einen tragbaren Fingerabdruck-Scanner (12), der von einer Sicherheitsperson mitgeführt werden kann und eine Tageszeit-Uhr sowie einen Anschluss für die Datenkommunikation zu und von dem Scanner enthält;
b) mehrere Andockstationen (14', 14", 14"'), die sich an Orten befinden, an denen Kontrollen ausgeführt werden sollen, wobei jede der Andockstationen die Form eines Aufnahmebehälters für die Aufnahme des Scanners (12) hat, wobei jede Andockstation einen Mikroprozessor und eine eindeutige Code-Kennung besitzt, wobei zwischen der Andockstation und dem darin aufgenommenen Scanner eine bidirektionale Datenkommunikation erfolgt, um der Sicherheitsperson zu ermöglichen, den Scanner in jede Andockstation einzusetzen und eine an jeder Andockstation vorzunehmende Aufzeichnung der Tageszeit, der eindeutigen Kennung der Andockstation und eines am Ort der Andockstation genommenen Fingerabdruckbildes der Sicherheitsperson auszuführen; und
c) einen Computer oder andere Überwachungsmittel (122), die konfiguriert sind, um die Aufzeichnung der Fingerabdruckbilder und der Tageszeiten, die mit den Kennungs-Codes der Andockstation korreliert sind, in sie herunterzuladen.

4. System nach Anspruch 3, wobei die Aufzeichnung im Scanner erfolgt, wobei das System ferner eine Überwachungsandockstation (120) in Form eines Aufnahmebehälters aufweist, um am Ende einer Kontrollrunde an den Orten den Scanner (12) aufnehmend einzusetzen und um von dem Scanner die mit den Kennungs-Codes der Andockstation korrelierten Fingerabdruckbilder und Tageszeiten für ein fortschreitendes Herunterladen in den Computer (122) herunterzuladen.

5. System nach Anspruch 4, wobei durch den Computer (122) Diagnose-Routinen bereitgestellt werden, die an dem Scanner (12) ausgeführt werden, wenn er sich in der Uberwachungsandockstation (120) befindet

6. System nach einem der Ansprüche 3, 4 oder 5, wobei der Scanner (12) batteriebetrieben ist und wobei die Überwachungsandockstation (120) mit einer Spannungsquelle versehen ist, um die Scannerbatterie wieder aufzuladen, wenn sie sich in der Andockstation befindet.

7. System nach einem der Ansprüche 3 bis 6, wobei der Scanner (12) ein Ultraschall-Fingerabdruck-Scanner ist

8. System nach einem der Ansprüche 3 bis 7, wobei der Scanner (12) eine Strichcode-Abtastfähigkeit hat.

## Revendications

1. Procédé d'identification d'empreintes digitales et de sécurité comprenant les étapes suivantes :
a) le port, sur un personnel de sécurité, d'un scanner portable d'empreintes digitales (12) comprenant une horloge et un port pour la communication de données de et vers le scanner ;
b) l'insertion, par le personnel de sécurité, du scanner dans une pluralité de postes d'accueil (14', 14", 14"') situés à des emplacements respectifs dans une ronde de lieux où les inspections doivent être réalisées, chacun des postes d'accueil ayant la forme d'un réceptacle pour recevoir le scanner, chaque poste d'accueil ayant un microprocesseur et un code d'identification unique, une communication bidirectionnelle des données ayant lieu entre le poste d'accueil et le scanner inséré dans celui-ci pour permettre au personnel de sécurité d'insérer le scanner dans chaque poste d'accueil et d'effectuer un enregistrement à chaque poste d'accueil de l'heure du jour, l'identification unique du poste d'accueil, et une image de l'empreinte digitale du personnel de sécurité prise à l'emplacement du poste d'accueil ; et
c) le téléchargement vers un ordinateur ou un autre moyen de contrôle (122) de l'enregistrement des images de l'empreinte digitale et des heures corrélées avec les codes d'identification du poste d'accueil.

2. Procédé selon la revendication 1, dans lequel l'enregistrement est effectué dans le scanner et l'étape (c) de téléchargement est réalisée par l'insertion, par le personnel de sécurité à la fin de la ronde, le scanner dans un poste d'accueil de supervision (120) associé opérationnellement au moyen de contrôle, le poste d'accueil de contrôle ayant la forme d'un réceptacle pour permettre l'insertion du scanner et le téléchargement depuis le scanner des images des empreintes digitales et des heures du jour corrélées avec les codes d'identification du poste d'accueil.

3. Système d'identification d'empreintes digitales et de sécurité comprenant :
a) un scanner portable d'empreintes digitales (12) pouvant être transporté par un personnel de sécurité et comprenant une horloge et un port pour la communication des données de et vers le scanner ;
b) une pluralité de postes d'accueil (14', 14", 14"') situés à des emplacements dans lesquels les inspections doivent être réalisées, chacun des postes d'accueil ayant la forme d'un réceptacle pour recevoir le scanner (12), chaque poste d'accueil ayant un microprocesseur et un code d'identification unique, une communication bidirectionnelle des données ayant lieu entre le poste d'accueil et le scanner inséré dans celui-ci pour permettre au personnel de sécurité d'insérer le scanner dans chaque poste d'accueil et d'effectuer un enregistrement à chaque poste d'accueil de l'heure du jour, l'identification unique du poste d'accueil et une image de l'empreinte digitale du personnel de sécurité prise à l'emplacement du poste d'accueil ; et
c) un ordinateur ou un autre moyen de contrôle (122) configuré pour recevoir par téléchargement l'enregistrement des images d'empreintes digitales et des heures du jour corrélées avec les codes d'identification du poste d'accueil.

4. Système selon la revendication 3, dans lequel l'enregistrement est effectué dans le scanner, le système comprenant également un poste d'accueil de supervision (120) sous la forme d'un réceptacle pour, à la fin d'une ronde d'inspection auxdits emplacements, recevoir l'insertion du scanner (12) et pour le téléchargement depuis le scanner des images d'empreintes digitales et des heures du jour corrélées avec les codes d'identification du poste d'accueil pour le téléchargement ultérieur vers l'ordinateur (122).

5. Système selon la revendication 4, dans lequel des routines de diagnostic sont fournies par l'ordinateur (122) pour l'opération sur le scanner (12) pendant qu'il se trouve dans le poste d'accueil de supervision (120).

6. Système selon l'une quelconque des revendications 3, 4 ou 5, dans lequel le scanner (12) fonctionne avec une batterie et dans lequel le poste d'accueil de supervision (120) est doté d'une source de tension pour recharger la batterie du scanner quand elle se trouve dans le poste d'accueil.

7. Système selon l'une quelconque des revendications 3 à 6, dans lequel le scanner (12) est un scanner d'empreintes digitales à ultrasons.

8. Système selon l'une quelconque des revendications 3 à 7, dans lequel le scanner (12) a une capacité de balayage de code-barres.
